(19) Europäisches Patentamt
European Patent Office
Office européen des brevets

(11) Veröffentlichungsnummer: **0 421 129 B1**

# (12) EUROPÄISCHE PATENTSCHRIFT

(45) Veröffentlichungstag der Patentschrift: **14.12.94**

(51) Int. Cl.$^5$: **C08G 75/02**

(21) Anmeldenummer: **90116820.3**

(22) Anmeldetag: **01.09.90**

## (54) Verfahren zur Herstellung von hochmolekularen Copolyarylensulfiden.

(30) Priorität: **14.09.89 DE 3930672**
**21.12.89 DE 3942416**

(43) Veröffentlichungstag der Anmeldung:
**10.04.91 Patentblatt 91/15**

(45) Bekanntmachung des Hinweises auf die Patenterteilung:
**14.12.94 Patentblatt 94/50**

(84) Benannte Vertragsstaaten:
**BE DE FR GB IT**

(56) Entgegenhaltungen:
**EP-A- 0 288 308**
**EP-A- 0 372 252**
**US-A- 3 819 407**

(73) Patentinhaber: **BAYER AG**

**D-51368 Leverkusen (DE)**

(72) Erfinder: **Köhler, Karl-Heinz, Dr.**
**Buschstrasse 165**
**D-4150 Krefeld (DE)**
Erfinder: **Tresper,Erhard Dr**
**Moerser Strasse 394**
**D- 4150 Krefeld (DE)**
Erfinder: **Schmidt, Manfred Dr**
**Erich-Klausener Strasse 37**
**D- 4150 Krefeld-Traar (DE)**
Erfinder: **Reinking, Klaus Dr**
**Robert-Stolz Strasse 16b**
**D- 5632 Wermelskirchen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 421 129 B1

## Beschreibung

Die Erfindung betrifft ein Verfahren zur Herstellung hochmolekularer, im wesentlichen linearer Copolyarylensulfide, die überwiegend Biphenylensulfid-Einheiten enthalten, durch Umsetzung von Halogen-Aromaten und Halogen-Biphenylenen mit Schwefelspendern in dipolaren aprotischen Lösungsmitteln.

Polyarylensulfide, insbesondere Poly-p-phenylensulfid (PPS) und Verfahren zur ihrer Herstellung sind bekannt (z.B. US-A 3 354 129, EP-A 171 021). PPS ist handelsüblich und besitzt im Vergleich zu einigen anderen teilkristallinen Thermoplasten aus der Gruppe der Polyamide und der Polyester eine bessere Temperatur- und Chemikalien-Beständigkeit sowie hervorragende inhärente Flammfestigkeit.

Dennoch besteht bei vielen Anwendungen, z.B. im Elektronik-Sektor, ein Bedarf an noch höherer thermischer Belastbarkeit bei gleichzeitig hoher Chemikalien-Resistenz und guten Verarbeitungs-Eigenschaften der Thermoplaste.

Eine höhere thermische Beständigkeit ist z.B. von Polymeren mit höherem Aromaten-Anteil zu erwarten. Beispiele dafür sind Polyarylensulfide, aufgebaut aus Biphenylen-Einheiten. Solche Polyarylensulfide sind bekannt (z.B. aus US-PS 3 354 129).

Solche Polyarylensulfide besitzen neben der hohen thermischen Beständigkeit eine sehr hohe Chemikalien-Resistenz, die mit der weitgehenden chemischen Inertheit der Polymerkette in Einklang steht.

Ihre thermoplastische Verarbeitung ist wegen ihrer außerordentlich hohen Schmelzpunkte schwierig.

Copolyarylensulfide aus Biphenylensulfid- und Phenylensulfid-Einheiten zeigen gegenüber Biphenylensulfid-Homopolymeren tiefere Schmelzpunkte; dies gilt insbesondere auch für deren Mischungen mit PPS (z.B. EP-A 287 396).

Solche Mischungen sind insbesondere in verstärkter Form thermoplastisch gut verarbeitbar, sie besitzen aber nicht mehr die im Vergleich zu PPS höheren thermischen Eigenschaften der reinen Copolyarylensulfide, da die Kristallisation dieser verstärkten (z.B. glasfaserhaltigen) Mischungen erheblich gemindert ist. Dies äußerst sich z.B. in einer Wärmeformbeständigkeit (z.B. HDT-A), die gleich oder geringer ist als die von entsprechenden PPS-Compounds. Erst durch Temperung bei Temperaturen unterhalb des Schmelzpunktes läßt sich die Wärmeformbeständigkeit der verstärkten Polyarylensulfid-Mischungen auf ein Niveau oberhalb von PPS anheben.

Es wurde nun gefunden, daß reine Copolyarylensulfide auf der Basis von Biphenylensulfid, die daneben wohl definierte kleinere Mengen anderer Arylensulfid-Einheiten enthalten, im Gegensatz zu den Mischungen solcher Copolyarylensulfide mit PPS, auch in verstärkter Form gut thermoplastisch verarbeitbar sind und gleichzeitig hervorragend verbesserte thermische Eigenschaften aufweisen.

Solche Copolyarylensulfide sind teilkristallin und haben Schmelzpunkte und Glasübergangstemperaturen höher als diejenigen von PPS. Sie besitzen eine ausreichend hohe Kristallisationsgeschwindikeit und weisen eine gegenüber PPS deutlich verbesserte Wärmeformbeständigkeit und Dauertemperaturbelastbarkeit auf.

Die Schmelzviskositäten bei Verarbeitungstemperatur sind vergleichbar denen des PPS.

E ist bekannt, Biphenylensulfid-Homopolymere und -Copolymere aus 4,4′-Di-Brombiphenyl und Natriumsulfid in N-Methylpyrrolidon in Anlehnung an bekannte PPS-Synthese-Verfahren herzustellen (z.B. EP-A 287 396). Solche Polybiphenylensulfide weisen gegenüber PPS verbesserte thermische Eigenschaften auf, jedoch ist das Molekulargewicht vergleichsweise gering und die molekulare Uneinheitlichkeit sehr groß.

Die große Uneinheitlichkeit ist erkennbar an einem hohen Oligomer-Anteil der sich vor dem Haupt-Maximum der Molmassen-Verteilung im HT-GPC Diagramm der sich zu erkennen gibt. (HT-GPC = Hochtemperatur-Gelchromatographie, z.B. beschrieben in DE-A 3 529 498, s. Fig. 2, Vergleichsbeispiel I und Fig. 4, Vergleichs-Beispiel III).

Es wurde nun gefunden, daß Biphenylensulfid-Homo- und -Copolymere mit deutlich höheren Molmassen und einer wesentlich geringeren molekularen Eineinheitlichkeit hergestellt werden können, wenn bei der Herstellung 4,4′-Dibrombiphenyl durch 4,4′-Di-Chlor-biphenyl ersetzt wird.

So hergestellte Polybiphenylensuldife besitzen vergleichbare thermische Eigenschaften, aber in Anbetracht des höheren Molekulargewichts wesentlich bessere mechanische Eigenschaften.

Die erfindungsgemäß hergestellten Copolyarylensulfide sind aufgebaut aus 50 bis 95 Mol.-% (bezogen auf I + II) wiederkehrenden Biphenylensulfid-Einheiten der Formel (Ia) oder (Ib)

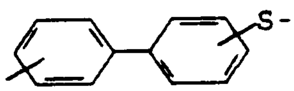 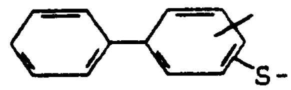

(Ia), (Ib)

und

5 bis 50 Mol.-% (bezogen auf I + II) an wiederkehrenden Arylensulfid-Einheiten der Formel (II)

-A-S- (II),

worin A für

| | |
|---|---|
| -Ar-R- steht mit Ar: | $C_6$-$C_{24}$-C-Aromat, außer Biphenyl, oder ein heterocyclischen Rest mit 5-14-Ringatomen, wobei bis zu 3-Ring-C-Atome durch Heteroatome wie N, O, S ersetzt sein können, oder $C_6$-$C_{24}$-Alkyl-Aromat |
| und R = | Einfachbindung, O-Ar, S-Ar, |

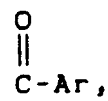

SO-Ar, $SO_2$-Ar,

wobei Ar die oben angegebene Bedeutung hat.

Diese Copolyarylensulfide können gegebenenfalls zusätzlich Monomer-Einheiten der Formel (III)

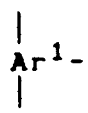 oder 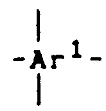

IIIa IIIb

in Mengen von bis zu 5 Mol.-%, vorzugsweise 0,1-0,5 Mol.-%, bezogen auf die Summe der Monomer-Einheiten (I) und (II), enthalten, wobei

$Ar^1$ für einen aromatischen $C_6$-$C_{14}$-Rest, einen heterocyclischen Rest mit 5-14 Ringatomen, wobei bis zu drei Ring-C-Atome durch Heteroatome wie N, O, S ersetzt sein können, steht.

Die Copolyarylensulfide können gegebenenfalls am Ende der Polymerkette Monomereinheiten der Formel (IV)

Ar-S- (IV),

in Mengen von bis zu 5 Mol.-%, vorzugsweise 0,7 bis 3 Mol.-%, bezogen auf die Summe der Monomer-Einheiten (I) und (II) und gegebenenfalls (III) enthalten, wobei Ar die in Formel (II) angegebene Bedeutung hat.

Die Copolyarylensulfide bestehen somit überwiegend aus wiederkehrenden Biphenylensulfid-Monomer-Einheiten und haben folgende physikalische Eigenschaften:

a) Schmelztemperaturen $T_M$ zwischen 300 °C und 405 °C

b) Glasübergangstemperatur $T_G$ zwischen 100 °C und 195 °C

c) Kristallisationsenthalpien $\Delta H_k$ und Schmelzenthalpien $\Delta H_M$ von mehr als 10 J/g

d) ein $\Delta T$, definiert als $\Delta T = T_M - T_K$, wobei $T_K$ die Kristallisationstemperatur der Polymer-Schmelze ist, das kleiner als 40 ° K ist

e) eine Schmelzviskosität $\eta_M$ bei Verarbeitungstemperaturen und einem Schergefälle von $10^3$ (1/s) von mehr als 10 Pa.s und weniger als 200 Pa.s

Die thermischen Daten $T_M$, $T_G$, $T_K$, $H_K$ und $H_M$ werden durch Differential-Scanning-Kalorimetrie (DSC) z.B. auf dem Gerät DSC 2 der Fa. Perkin-Elmer ermittelt, wobei mit einer Heizrate von 20 K/min die Probe

auf ca 30° K oberhalb des Schmelzpunktes aufgeheizt, nach mindestens 2 min. Schmelzeverweilzeit mit einer Kühlrate von 30 K/min auf ca. Raumtemperatur abgekühlt und mit der gleichen Heizrate erneut bis oberhalb des Schmelzpunktes aufgeheizt wird. $T_K$ ist das Maximum des Kristallisationspeaks in der Abkühlkurve der Schmelze, $T_M$ das Maximum des Schmelzpeaks beim 2. Aufheizen. Die Differenz aus $T_M$ und $T_K$ ist ein Maß für die Kristallisationsgeschwindigkeit des Copolyarylensulfids.

Die Schmelzviskositäten $\eta_M$ (Eta-M), Dimension (Pa.s) werden in einem handelsüblichen Hochdruck-Kapillar-Viskosimeter bei geeigneter Schmelzetemperatur und verschiedenen Schergeschwindigkeiten $\gamma$ - (Gamma-Punkt), Dimension (1/s) gemessen. Aus den so erhaltenen Viskositätsfunktionen wird jeweils die Schmelzviskosität bei einem Schergefälle von $10^3$ (1/s) in Pa.s als Vergleichswert angegeben. Da die Copolyarylensulfide je nach chemischer Zusammensetzung unterschiedliche Schmelzpunkte aufweisen, läßt sich keine einheitliche Meßtemperatur für alle Copolymere angeben. Die geeignete Schmelztemperatur ist daher die Verarbeitungstemperatur des jeweiligen Copolyarylensulfids und kann z.B. ca. 30° K oberhalb der durch DSC ermittelten Schmelztemperatur $T_M$ liegen.

Die Copolyarylensulfide haben sehr unterschiedliche thermische Eigenschaften, insbesondere $T_M$, $T_K$, $\Delta H_M$, in Abhängikeit von ihrer chemischen Zusammensetzung. So zeigen z.B. Copolyarylensulfide aus 4,4'-Biphenylensulfid-Einheiten und 1,4-Phenylensulfid-Einheiten mit zunehmenden Anteil an Biphenylensulfid-Einheiten zunehmend höhere und engere Erweichungsbereiche bzw. Schmelzpunkte $T_M$. Parallel dazu steigen auch die Kristallisationstemperaturen $T_K$ sowie die Kristallisations- und Schmelzenthalpien $\Delta H_K$ und $\Delta H_M$. In der gleichen Weise nimmt auch $\Delta T$ (definiert als $\Delta T = T_M - T_K$) ab.

Für eine thermoplastische Verarbeitung solcher Copolyarylensulfide ist eine ausreichend schnelle und genügend hohe Kristallisation wünschenswert. Deshalb ist ein hoher Anteil an Biphenylen-Einheiten (I) günstig. Copolyarylensuldife mit einem sehr hohen Anteil an Biphenylen-Einheiten sind zur Verarbeitung als Sinterpulver, z.B. in Sinterpressen oder für Beschichtungen geeignet, Copolyarylensulfide mit einem geringgen Anteil an Biphenylen-Einheiten kristallisieren tendenziell langsamer und unvollständiger.

Die Wahl einer geeigneten chemischen Zusammensetzung eines Copolyarylensulfids für eine bestimmte Anwendung wird neben den thermischen Eigenschaften auch durch die jeweils erreichbaren Molekulargewichte $\overline{M}_w$, bestimmt durch Hochdrucktemperatur-Gelchromatographie, bzw. die Schmelzviskosität, bestimmt durch Hochdruck-Kapillarviskosimetrie, beeinflußt. So nimmt mit zunehmendem Anteil an Biphenylen-Einheiten im Copolyarylensulfid dessen Molekulargewicht $\overline{M}_w$ deutlich ab. Gleichzeitig beobachtet man eine zunehmende Schwerlöslichkeit der Copolyarylensulfide im Reaktionsmedium während der Synthese. Die Höhe des erreichbaren Molekulargewichts ist nicht ohne Einfluß auf die mechanischen Eigenschaften der Copolyarylensulfide nach Verarbeitung.

Thermoplastisch gut verarbeitbare Copolyarylensulfide mit verbesserten ausgewogenen thermischen und mechanischen Eigenschaften sollten daher die verschiedenen Monomer-Einheiten in speziellen, wohl definierten Verhältnissen zueinander enthalten.

Neben den Mol-Verhältnisen der Monomer-Einheiten ist insbesondere bei höheren Biphenyl-Anteilen die Isomeren-Reinheit des eingesetzten Di-Halogenbiphenyls von großer Bedeutung. Mit zunehmender Menge an Isomeren-Verunreinigungen, wie z.B. 4,2'-Isomeren können $T_M$ und $T_K$ erheblich vermindert werden.

Daher enthalten die Copolyarylensulfide bevorzugt 65 bis 80 Mol.-% an 4,4'-Biphenylensulfid-Einheiten, wobei der Anteil an anderen stellungsisomeren Biphenylensulfid-Einheiten kleiner als 0,1 Mol.-%, vorzugsweise kleiner 0,03 Mol.-% bezogen auf Biphenylensulfid-Einheiten ist und 35 bis 20 Mol.-% an 1,4-Phenylensulfid-Einheiten mit einem Anteil an stellungsisomeren Phenylensulfid-Einheiten von weniger als 0,1 Mol.-%, vorzugsweise weniger 0,05 Mol.-% bezogen auf Phenylensulfid-Einheiten. (Mol.-% beziehen sich auf die Summe der Monomer-Einheiten).

Die Copolyarylensulfide sind weiter gekennzeichnet durch Schmelzpunkts-Maxima $T_M$ zwischen 305 und 375°C, durch Kristallisations-Maxima $T_K$ der erstarrenden Polymer-Schmelzen zwischen 270°C und 360°C und durch Kristallisations- und Schmelzenthalpien zwischen 20 und 55 J/g, wobei die jeweils höheren Werte den Copolyarylensulfiden mit dem größeren Anteil an Biphenylen-Einheiten entsprechen. Die Messung dieser thermischen Daten geschieht durch DSC, wie oben beschrieben.

Die Schmelzviskositäten können z.B. bei 380°C gemessen werden und liegen bei einem Schergefälle von $10^3$ (1/s) zwischen 10 und 180 Pa.s, vorzugsweise zwischen 20 und 100 Pa.s.

Die Bestimmung dieser Schmelzviskositäten geschieht in einem Hochdruck-Kapillarviskosimeter, wie z.B. von Fa. Göttfert hergestellt, wobei die Polymer-Schmelze in einem entsprechend beheizbaren Kanal von 170 mm Länge und 9,5 mm Durchmesser mit Hilfe eines Stempels mit Belastungen von ca. 20 bis 600 kg durch eine Düse gepreßt wird, die eine Länge von 30 mm und einem Durchmesser von 1 mm hat. Durch die unterschiedlichen Belastungen werden verschiedene Schergefälle erzeugt.

Die Molekulargewichte $M_w$ (Gewichtsmittel; gemessen durch Hochtemperatur-Gelchromatographie, z.B. gemäß DE-OS 3 529 498) liegen im Bereich von 20.000 bis 100.000 g/Mol, vorzugsweise von 30.000 bis 60.000 g/Mol, wobei Copolyarylensulfide mit einem höheren Anteil an Biphenylen-Einheiten tendenziell geringere Molmassen aufweisen. Durch zusätzlich eingebrachte Verzweiger (Monomereinheiten III) lassen sich die Molmassen und Schmelzviskositäten weiter steigern.

Polybiphenylensulfide, hergestellt aus 4,4'-Di-Chlor-biphenyl weisen gegenüber Polybiphenylensulfiden, hergestellt aus gleich molaren Mengen von 4'4'-Di-Brom-biphenyl bei vergleichbaren gewichtsmittleren Molmassen $\overline{M}_w$ eine geringere Uneinheitlichkeit auf.

Die molekulare Uneinheitlichkeit U kann durch folgende Beziehung charakterisiert werden:

$$U = \left[ \frac{\overline{M}_w}{\overline{M}_n} - 1 \right]$$

wobei $\overline{M}_w$ für das gewichtsgemittelte Molekulargewicht steht und $\overline{M}_n$ für das zahlengemittelte Molekulargewicht.

Die erfindungsgemäß hergestellten Polymeren haben $\overline{M}_w$-Werte von 11.000 bis 100.000 und U-Werte von 1,9 bis 4.9.

Zu einem experimentell bestimmten $\overline{M}_w$-Wert ergibt sich ein experimentell zu bestimmender $\overline{M}_n$-Wert. Zu einem experimentell bestimmten $\overline{M}_n$-Wert ergibt sich ein experimentell zu bestimmender $\overline{M}_w$-Wert.

Gegenstand der Erfindung ist ein Verfahren zur Herstellung der oben beschriebenen Copolyarylensulfide in welchem

a) 50 bis 95 Mol.-%, vorzugsweise 50 bis 80 Mol.-% insbesondere 65 bis 80 Mol.-% Di-Chlorbiphenyle der Formeln (Va) und/oder (Vb)

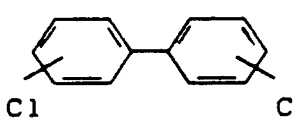 (Va) oder 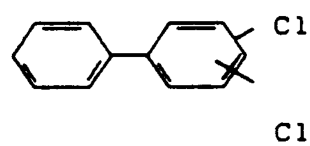 (Vb)

und

50 bis 5 Mol.-%, vorzugsweise 50 bis 20 Mol.-%, insbesondere 35 bis 20 Mol.-% Dihalogenaromaten der Formel (VI)

X-A-X (VI),

worin A wie in Formel II definiert ist und

X Halogen, bevorzugt Cl ist und

b) 0 - 5 Mol.-%, vorzugsweise 0,1 bis 0,5 Mol.-%, bezogen auf a) eines Tri- oder Tetrahalogenaromaten der Formel (VII)

$Ar^2X_n$ (VII),

wobei

- $Ar^2$ ein $C_6$-$C_{24}$-C-Aromat, außer Biphenyl oder ein heterocyclischer Rest mit 5 bis 14 Ringatomen, wobei bis zu 3 Ring-C-Atome durch Heroatome wie N, O, S ersetzt sein können, oder ein $C_6$-$C_{24}$-Alkyl-Aromat ist.
- X für Halogen, bevorzugt Chlor steht und
- n für die Zahl 3 oder 4 steht umgesetzt werden mit

c) Alkalisulfiden und/oder Alkalihydrogensulfide, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a + b) : c 0,75 : 1 bis 1,25 : 1 ist,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch auch 0,2 - 50 Mol.-%, bevorzugt 0,2 bis 25 Mol.-%, bezogen auf die Mole-Dihalogenaromate, einer Aminosäure zugegeben werden kann

e) gegebenenfalls in Anwesenheit von Monohalogen-Aromaten der Formel (VIII)

R-Ar-X (VIII),

worin

X für Halogen wie Cl oder Br steht,

Ar die für Formel (VII) angegebene Bedeutung hat

R gleich H ist, bzw. die für Formel (II) angegebene Bedeutung hat,

wobei

die Umsetzung der Komponenten in einem polaren aprotischen Lösungsmittels in Anwesenheit eines Azeotropbildners bei Temperaturen erfolgt, die eine gleichzeitige destillative Auskreisung des Wassers erlauben.

Die Umsetzung geschieht vorzugsweise bei Normaldruck.

Alkalisulfide können auch aus $H_2S$ und den Alkalihydroxiden bzw. aus dem Hydrogensulfiden und Alkalihydroxiden hergestellt werden.

Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und die Entwässerung des Gesamtgemisches durchgeführt werden. Beliebig andere Reihenfolgen der Zugabe der Reaktionskomponenten vor und nach der Entwässerung sind auch möglich.

Der Wasserdestillation mit Halogen-Aromaten als Azeotropbildnern sind unter üblichen Reaktionsbedingungen Grenzen gesetzt durch die molaren Verhälnisse der Dihalogenaromaten V und VI zueinander, insbesondere bei Anteilen von weniger als 20 Mol.-% an Dihalogenaromaten VI.

In solchen Fällen kann mit einem geeigneten Überschuß an VI bei Temperaturen unter 200 °C das Alkalisulfid azeotrop entwässert und nach beendeter Wasserabscheidung der Überschuß an VI aus dem Reaktions-Ansatz herausdestilliert werden. Anstelle eines Überschusses von VI kann auch mit anderen geeigneten inerten Schleppern entwässert werden, die aus dem Reaktions-Ansatz redestilliert werden. Die Dosier- bzw. Entwässerungszeiten betragen vorzugsweise 2-4 Stunden. Eine andere Variante der Entwässerung des Alkalisulfid-Hydrats besteht in der azeotropen Destillation in einer separaten Vorstufe mit einem geeigneten Schlepper wie z.B. Toluol oder Mesitylen, wobei Katalysatoren, wie unter d) beschrieben, vorhanden sein können.

Das dabei isolierte feinstkörnige wasserfreie Alkalisulfid kann mit den Halogen-Aromaten und dem Lösungsmittel sofort in die Reaktion eingesetzt werden.

Die Entwässerung des Alkalisulfid-Hydrats kann auch so vorgenommen werden, daß in Abwesenheit von Halogen-Aromaten in einem weitgehend inerten, schwer hydrolysierbaren aprotischen dipolaren Lösungsmittel, wie z.B. N-Methylcaprolactam oder N,N-Dimethylimidazolidinon das Wasser bei erhöhter Temperatur abdestilliert wird. In diese Vorlage aus wasserfreien Alkalisulfiden, in aprotischen dipolaren Lösungsmitteln, die gegebenenfalls oben genannte Katalysatoren enthalten, können die Halogenaromaten gemeinsam oder getrennt zudosiert und bei Temperaturen oberhalb 200 °C umgesetzt werden.

Wird die Entwässerung in Gegenwart von Halogenaromaten durchgeführt, so kann die Reihenfolge der Dosierung der Halogenaromaten V und VI gezielt variiert werden, um auf diese Weise Umsetzungen einer Gruppe von Halogenaromaten untereinander zu bevorzugen und so die Bildung von Block-Copolymeren gegenüber statistischen Copolymeren zu fördern. So können z.B. die Halogenaromaten VI in dem Reaktionansatz vorgelegt und die Halogenaromate V z.B erst nach beendeter Entwässerung zudosiert und zur Reaktion gebracht werden.

Vorzugsweise werden alle Reaktionspartner zusammen mit Aminosäuren in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktionszeiten bei Temperaturen zwischen 230 °C und 250 °C sind mindestens 5 h, vorzugsweise mehr als 10 Stunden. Durch Temperaturerhöhung unter Druck oder mit höhersiedenden Lösungsmitteln bzw. in Gegenwart geeigneter Katalysatoren kann die Reaktionszeit verkürzt werden.

Die Aufarbeitung des Umsetzungsgemisches und die Isolierung der Copolyarylensulfide können in an sich bekannter Weise erfolgen.

Die Co-Polyarylensulfide können direkt aus der Reaktionslösung oder nach Verdünnung mit Lösungsmittel oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Produkts schließt sich im allgemeinen eine Wäsche mit protischen Solventien, z.B. Wasser an. Eine Wäsche oder Extraktion mit anderen Waschflüssigkeiten (z.B. Ketone wie Aceton) die auch zusätzlich oder nachträglich zu dieser Wäsche durchgeführt werden kann, ist auch möglich.

Die Reaktionslösung kann auch durch geeignete Maßnahmen verfestigt, dann in den genannten Solventien aufgenommen und weiter bearbeitet werden, wie oben beschrieben.

Erfindungsgemäß können Dihalogenaromaten der Formeln V und VI und zusätzlich gegebenenfalls Monohalogenaromaten der Formel VIII bzw. Polyhalogenaromaten der Formel VII (als Regler) eingesetzt werden.

Beispiele für erfindungsgemäß einsetzbare Dihalogen-Diphenyle der Formel (Va) und (Vb) sind: 2,5'-Dichlorbiphenyl, 2,3'-Dichlorbiphenyl, 2,2'-Dichlorbiphenyl, 3,4'-Dichlorbiphenyl, 3,3'-Dichlorbiphenyl, 4,4'-Dichlorbiphenyl, 4,2'-Dichlorbiphenyl.

Bevorzugter Dihalogenaromat gemäß Formel V ist 4,4'-Dichlorbiphenyl. Besonders bevorzugt ist ein 4,4'-Dichlorbiphenyl mit einer Isomeren-Reinheit von mehr als 99,9 % 4,4'-Stellungsisomeren, ganz besonders bevorzugt mit einer Isomeren-Reinheit von größer 99,95 % 4,4'-Dichlorbiphenyl. Die Isomeren-Reinheit wird gaschromatographisch mit Hilfe von Eichsubstanzen bestimmt.

Gemische von verschiedenen Isomeren wie z.B. 4,2'- und 4,4'-Dichlorbiphenyl können je nach Mischungs-Verhältnis die thermischen Eigenschaften wie Schmelz- und Kristallisationstemperatur unter Umständen erheblich vermindern. Deshalb ist eine hohe Isomeren-Reinheit für die Synthese von erfindungsgemäßen Copolyarylensulfiden mit hohen thermischen Eigenschaften erforderlich.

Dichlorbiphenyle können z.B. nach bekannten Methoden der Sulfochlorierung von Biphenyl, die sehr selektiv verläuft, und anschließende $SO_2$-Abspaltung hergestellt werden, wobei durch geeignete Umkristallisation die Isomeren-Reinheit auf ein Maximum gebracht werden kann. Eine andere Methode besteht in der Direktchlorierung von Biphenyl mit Hilfe geeigneter Zeolithe.

Beispiele für erfindungsgemäß einsetzbare Dihalogenaromaten der allgemeinen Formel VI sind:
1,4-Dibrombenzol, 1,4-Dichlorbenzol, 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,3,4,5-Tetramethyl-2,5-dichlorbenzol, 1-Cyclohexyl-2,5-dichlorbenzol, 1-Phenyl-2,5-dichlorbenzol, 1-Benzyl-2,6-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 1,5'-Dichlornaphthalin, 2,6'-Dichlornaphthalin, 1,5-Dichloranthracen, 4,4'-Dichlorbenzophenon, 4,4'-Dichlordiphenylsulfon, 4,7-Dichlorchinolin 2,4-Dichlor-1,3,5-triazin, 2,6-Dichlorbenzonitril, 4,3'-Dichlorphthalanil; sie können einzeln oder im Gemisch eingesetzt werden, vorzugsweise aber einzeln. Bevorzugt ist 1,4-Dichlorbenzol.

Beispiele für gegebenenfalls einsetzbare Monohalogen-Aromaten der allgemeinen Formel VIII sind: Phenol, Thiophenol, Isooctylphenole, 4-Mercaptobisphenyl, 3-Chlorbiphenyl, 4-Chlorbiphenyl, 4-Brombiphenyl, 4-Bromdiphenylsulfid, 4-Chlordiphenylsulfid, 4-Chlordiphenylsulfon, (4-Chlorphenyl)phenylketon, (3-Chlorphenyl)phenylketon. Die Zugabe der Monohalogenaromaten kann vor oder während der Reaktion, einzeln oder als Gemisch von Halogenaromaten bzw. portionsweise zu bestimmten Zeitpunkten des Reaktionsablaufes erfolgen.

Beispiele für erfindungsgemäß einzusetzende Tri- bzw. Tetrahalogenaromaten der Formel (VII sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame und cyclische N-Alkylharnstoffe verwendet.

N-Alkyllactame sind solche von N-Alkyl-Aminosäuren mit 3-11 C-Atomen, die gegebenenfalls Substituenten am Kohlenstoffgerüst tragen können, die unter Reaktionsbedingungen inert sind.

Beispielsweise finden als N-Alkyllacame Verwendung:
N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können auch über beliebige Alkylen-Reste am N-Atom verknüpfte Bislactame wie z.B. Bis-(N-1,4-Butylen)caprolactam, Bis-(N-1,6-hexylen)-caprolactam, Bis-(N-1,4-butylen)2-pyrrolidon verwendet werden.

Beispiele für cyclische N-Alkylharnstoffe sind:
N,N-Dimethylimidazolidinon,
N,N'-Dimethyl-1,3-perhydrodiazin-2-on, N,N'-Dimethyl-1,3-perhydrodiazepin-2-on.

Es können Mischungen der vorstehenden Lösungsmittel gewählt werden.

Besonders bevorzugtes Lösungsmittel ist N-Methylcaprolactam (NMC).

Als einsetzbare Aminosäuren kommen bevorzugt offenkettige oder cyclische aliphatische $C_1$-$C_{20}$-Aminosäuren in Frage, die seitenständige Reste wie z.B. $C_1$-$C_4$-Alkoxy-thio-$C_1$-$C_4$-alkylreste oder einen heterocyclischen $C_6$-$C_{14}$-Rest mit bis zu drei Heteroatomen wie N, O, S tragen können. Die Aminogruppe kann dabei als $NH_2$-NRH-oder $NR_2$-Gruppierung vorliegen, wobei R ein beliebiger Alkylrest, bevorzugt ein $C_1$-$C_4$-Alkylrest, ist. Zwei Reste R können auch bei beiden Enden einer Alkylenkette mit seitenständiger Carboxylgruppe sein, die zusammen mit der NH-Gruppierung einen Cyclus bildet.

Die Aminogruppe kann in $\alpha$-, $\beta$-, $\gamma$- bzw. $\omega$-Stellung fixiert sein. es können gegebenenfalls auch Diaminosäuren bzw. Aminocarbonsäuren eingesetzt werden.

Beispielsweise folgende Aminosäuren seien genannt:
Glycin, $\alpha$-Alanin, $\beta$-Alanin ($\alpha$- und $\beta$-Aminopropionsäure), $\alpha$-Aminobuttersäure, $\gamma$-Aminobuttersäure, $\alpha$-Amino-isovaleriansäure (Valin), $\alpha$-Amino-isocapronsäure (Leucin, $\epsilon$-Aminocapronsäure, 11-Aminoundecansäure, N-Methylaminoessigsäure (Sarkosin) N-Methyl-$\alpha$-aminopropionsäure, N-Methyl-$\gamma$-aminobuttersäure, N-Methyl-$\epsilon$-Aminocapronsäure, N-Methyl-11-aminoundecansäure, Aminobutandisäure (Asparaginsäure), 2-Aminopentandisäure (Glutaminsäure), 2-Amino-4-methylthiobutansäure (Methionin), Phenylalanin, Prolin.

Die Reaktion kann gegebenenfalls zusätzlich in Anwesenheit von üblichen Katalysatoren wie z.B.:
Alkalicarboxylaten (DE-A 2 453 749), Lithiumhalogeniden oder Alkalicarboxylaten (DE-A 2 623 362), Lithiumchlorid oder Lithiumcarboxylat (DE-A 2 623 363), Alkalicarbonaten in Kombination mit Alkalicarboxylaten (US-A-4 038 259, Lithiumacetat (DE-A 2 930 710), Trialkaliphosphonaten (DE-A 2 030 797), Alkalifluoriden (DE-A 3 019 732), Alkalisulfonaten (US-A 4 038 260), Lithiumcarbonat und Lithiumborat (US-A 4 030 518) durchgeführt werden.

Die Reaktion sollte vorzugsweise in Apparaturen durchgeführt werden, die keine Verunreinigungen des Reaktionsgemisches durch Metallspuren von z.B. Fe, Co, Ni oder Cu in metallischer oder ionogener Form bewirken können. Vorteilhafte Materialien für Apparate-Teile, die mit der Reaktionslösung bzw. mit Sulfid-Lösung in Kontakt stehen sind Titan und spezielle Edelstähle.

Die erfindungsgemäß hergestellten Copolyarylensulfide werden zur Herstellung von Formkörpern, Fasern, Folien und Spritzgußmassen verwendet.

Dazu können die erfindungsgemäß hergestellten Copolyarylensulfide mit faserigen und teilchenförmigen Füll- und Verstärkungsstoffen bis ca. 70 Gew.-% bezogen auf die Summe von Polymer plus Füllstoff (bzw. Vertärkungsstoff) gemischt werden. Beispiele für Füllstoffe sind: Quarz, Kaolin, Glimmer, Talkum, $BaSO_4$, Gips, Glaskugeln, gefällte pyrogene Kieselsäure, Metalloxide wie z.B. $TiO_2$, Metallsulfide wie z.B. ZnS, Ruß, Graphite, Metallpulver. Beispiele für Verstärkungsfasern sind Glasfasern, Kohlefasern, Whiskers, Metallfasern, Aramidfasern, Bornitridfasern. Die Füll- und Verstärkungsstoffe können einzeln oder in Mischung miteinander eingesetzt werden.

Sie können, insbesondere im Fall von Glasfasern, geeignete Schlichten und Haftvermittler enthalten, die die Anbindung an das Polymere fördern.

Die Copolyarylensulfide können sowohl unverstärkt als auch verstärkt übliche Additive wie Thermostabilisatoren, Antioxidantien, Fließhilfsmittel, Farbmittel und/oder Entformungsmittel enthalten.

Bevorzugte Füllstoffe sind: Quarz, Kaolin, Glimmer, Talkum, Gips, Glaskugeln; bevorzugte Verstärkungsstoffe sind silanisierte Glasfasern und Kohlefasern, insbesondere silianisierte Glasfasern mit einem Faserdurchmesser von 3-15 $\mu$m, vorzugsweise ca. 10 $\mu$m.

Die Einarbeitung der Füll- und Verstärkungsstoffe in die erfindungsgemäßen Copoylarylensulfide geschieht durch Schmelzecompoundierung der Komponenten auf üblichen Aggregaten wie z.B. Knetern, Innenmischern oder Extrudern bei Masse-Temperaturen von ca 30° K oberhalb der Schmelztemperatur $T_M$ des Copolyarylensulfids; bevorzugt werden Kneter und Zweiwellen-Extruder.

Diese verstärkten Copolyarylensulfide können auf üblichen Spritzguß-Maschinen zu beliebigen Formkörpern verarbeitet werden. Um gut kristallisierte Formteile zu erhalten, sind Werkzeugtemperaturen erforderlich, die hinreichend weit oberhalb der Glastemperaturen, vorzugsweise 20 - 30° K oberhalb $T_G$,

liegen. Thermische Eigenschaften, wie z.B. die Wärmeformbeständigkeit können so optimal genutzt werden. Eine weitere Methode zur Erhöhung der Wärmeformbeständigkeit besteht darin, daß die Formkörper bei Temperaturen von 100 - 150° K oberhalb $T_G$ bzw. 50 - 100° K unterhalb des Schmelzpunktes $T_M$ des Copolyarylensulfids über Zeiten von ca. 2 bis ca. 5 Stunden getempert werden. Auf diese Weise kann die Wärmeformbeständigkeit auf ein Maximum gebracht werden.

Eine weitere Verwendung des Copolyarylensulfids ist die Herstellung von Folien. Hierzu verwendet man vorzugsweise Copolyarylensulfide ohne Füllstoffe, sie können aber auch feinteilige Füllstoffe zur Erzielung definierter Oberflächenrauhigkeiten oder Reibungskoeffizienten erhalten. Die Folien können in bekannter Weise durch Extrusion über eine Breitschlitzdüse hergestellt werden. Die Verarbeitungstemperatur ist dabei 5 bis 80° K, bevorzugt 10 bis 50° K oberhalb des Schmelzpunktes. Die aus der Düse austretende Schmelze wird auf eine rotierende Walze mit einer Temperatur von maximal 100-120° C geleitet und so rasch unter die Kristallisationstemperatur abgekühlt, damit eine amorphe Folie entsteht.

Die Folie kann bei Zimmertemperatur oder bei erhöhter Temperatur, vorzugsweise im Bereich $T_g$ bis $T_k$ mono- oder biaxial verstreckt werden. Die Reckrate kann 4 - 14 betragen, bevorzugt in Maschinenrichtung und quer dazu 2,0 - 3,5. Das biaxiale Recken kann sequentiell oder simultan erfolgen. Anschließend wird die Folie bei Temperaturen oberhalb $T_k$ und unterhalb der Schmelztemperatur thermofixiert.

Eine weitere Verwendung der Copolyarylensulfide ist die Herstellung von Filamenten und Fasern.

Die Verspinnung der Copolyarylensulfide erfolgt nach üblichen Schmelzspinnverfahren und stellt im allgemeinen keinerlei spezielle Anforderungen. Die Verarbeitungstemperatur liegt 5 - 100° C oberhalb des Schmelzpunktes des Polymeren, bevorzugt 10 - 50° C oberhalb des Schmelzpunktes des Polymeren.

Anschließend wird das Spinngut in festem Zustand verstreckt. Diese Verstreckung erfolgt bei Raumtemperatur, bevorzugt bei erhöhten Temperaturen, stets jedoch unterhalb des Schmelzpunktes des Polymeren, besonders bevorzugt in einem Temperaturbereich zwischen 70° C und 150° C. Dabei können vorzugsweise Gesamtstreckgrade von 4 bis 10 erreicht werden.

Die Verstreckung kann dabei beispielsweise in Luft, Wasser oder anderen Wärmeträgern oder auf Kontaktheizern erfolgen.

Die Vertreckung kann einstufig oder mehrstufig durchgeführt werden.

Vorzugsweise kann sich an den Streckprozeß z.B. zur Verbesserung der thermischen Eigenschaften, insbesondere der Reduktion von Koch- und Thermoschrumpf, ein Fixierprozeß anschließen.

Der Fixierprozeß kann kontinuierlich oder diskontinuierlich, vorzugsweise kontinuierlich erfolgen.

Der Fixierprozeß kann unter Spannung oder spannungslos, vorzugsweise unter Spannung durchgeführt werden bei Temperaturen, die unterhalb des Schmelzpunktes des Polyarylensulfides liegen, vorzugsweise bis 100° C, besonders bevorzugt bis 50° C unterhalb des Schmelzpunktes. Die Verweilzeiten liegen dabei von 1 Sekunde bis 10 Minuten, von 10 Sekunden bis 200 Sekunden.

Bei diesem Fixierprozess können Fasern mit einem hohen Kristallinitätsgrad hergestellt werden.

Die Fasern zeichnen sich durch ihre problemlose Herstellbarkeit aus. Es werden keine Stabilisatoren benötigt, die das Nachhärten während des Verspinnens, welches zur Bildung von Gelteilchen führen kann, verhindern. Ebenso sind spezielle Filtrationsverfahren nicht erforderlich; zur Verhinderung von Filamentgarnbrüchen beim Spinnen und Strecken sind übliche Düsenfilter mit Lochdurchmesser zwischen 40 - 20 µm ausreichend.

Ein weiterer Vorteil des erfindungsgemäßen Verfahrens ist, daß bei der Verarbeitung der Polymeren keinerlei Ausgasungen beobachtet werden, und das Spinngut vakuolenfrei ist.

Die Verspinnung erfolgt nach üblicher Schmelzspinntechnik und erfordert keinerlei spezielle Vorkehrungen, insbesondere sind alle gebräuchlichen Fadenleitorgane einsetzbar.

Die Häufigkeit von Filamentbrüchen beim Spinnen und Strecken ist gegenüber üblichen Textilfasern nicht erhöht.

Das erhaltene Spinngut ist nicht spröde, läßt sich problemlos verstrecken und kristallisiert während einer kurzzeitigen, kontinuierlich durchführbaren Thermofixierung.

Die Fasern und Filamente lassen sich ohne Schwierigkeiten üblichen textilen Verarbeitungsprozessen unterwerfen.

Entsprechend der hohen Kristallinität zeichnen sich die Fasern und Filamente durch große Thermostabilität, niedrigen Koch- und Thermoschrumpf sowie sehr geringe Kriechneigung bei hohen Temperaturen aus. Weiterhin sind die erfindungsgemäßen Fasern und Filamente durch hohe Festigkeit, hohen Elastizitätsmodul und große Chemikalienbeständigkeit gekennzeichnet.

Die Fasern und Filmente zeichnen sich darüber hinaus durch ihre besonders hohe Thermostabilität aus, die bis ca 70° K über der Thermostabilität des normalen Polyphenylensulfids liegt.

Derartige Thermostabilitäten werden ansonsten eine von wesentlich teueren Werkstoffen, z.B. Polyetherketonen und Polyimiden erreicht.

Die Fasern und Filamente eignen sich beispielsweise zur Herstellung von Schutzbekleidung, Vliesstoffen, beispielsweise für die Filtration und für elektrolytische Membranen.

Beispiel 1 (70 Mol-% Biphenylensulfid-Einheiten, PAS-B-70)

In einem 5 l-Reaktionskessel mit Rührer, Thermometer, Schwerphasen-Wasserabscheider, Rückflußkühler und Tropftrichter werden unter Stickstoff 3.105 g N-Methylcaprolactam (NMC), 232,8 g (1,58 Mol) 1,4-Dichlorbenzol und 824 g (3,69 Mol) 4,4′-Dichlorbiphenyl vorgelegt und auf 210-215 °C erwärmt. Dazu wird unter kräftigem Rühren innerhalb von 90 bis 120 min eine ca. 80 °C warme Lösung von 742 g Natriumsulfidhydrat (5,80 Mol $Na_2S$) und 89,6 g (0,79 Mol) $\epsilon$-Caprolactam in ca. 260 g Wasser so hinzugetropft, daß das zugeführte Wasser gleichzeitig azeotrop mit 1,4-Dichlorbenzol abgeführt werden kann. Zur Erhaltung der Stöchiometrie wird das abdestillierte, 1,4-Dichlorbenzol nach Abtrennung des Wassers wieder in den Reaktionskessel zurückgeführt. Nach Ende der Zugabe und beendeter Wasserabscheidung wird der Ansatz langsam auf 230 °C erhitzt und weitere 25 h bei ≧ 230 °C gerührt. Die Aufarbeitung des Polyarylensulfids geschieht durch Fällen des Reaktionsansatzes unter kräftigem Rühren in einem großen Überschuß von Isopropanol, Filtrieren und Waschen des Rückstandes mit Isopropanol.

Aufnehmen des Rückstandes in Wasser, Ansäuern auf pH 1-2 mit wässriger $H_2SO_4$, und neutralwaschen mit Wasser. Anschließend wird im Vakuumtrockenschrank bei 120 °C, über 12 h getrocknet. Das Polyarylensulfid hat ein Schmelz-Maximum bei 355-358 °C und ein $\overline{M}_w$ von 35.300 (s. Fig. 1).

Beispiel 2

In einem 5 l-Reaktionskessel, der mit einem Thermometer, Rührer, kühlbarer Kolonne, Destillatteiler, Rückflußkühler und zwei Tropftrichtern ausgerüstet ist, werden unter Stickstoff 2.464 g N-Methylcaprolactam, 202,4 g 1,4-Dichlorbenzol und 358,4 g 4,4′-Dichlordiphenyl vorgelegt und zum Rückfluß erwärmt. Dazu wird über einen Zeitraum von 90 Minuten eine Mischung von 647,8 g Natriumsulfidhydrat (ca. 60 % Natriumsulfid), 103,9 g Caprolactam und 262 g Wasser so zugetropft, daß das zugeführte Wasser gleichzeitig azeotrop mit 1,4-Dichlorbenzol abgeführt werden kann. Gleichzeitig werden weitere 358,4 g 4,4′-Dichlordiphenyl in 460 g N-Methylcaprolactam über einen Zeitraum von ca. 70 Minuten zur Reaktionsmischung zugegeben. Zur Erhaltung der Stöchiometrie wird abdestillierendes 1,4-Dichlorbenzol nach Abtrennung des Wassers wieder in den Ansatz zurückgeführt. Nach beendeter Zugabe und beendeter Entwässerung wird die Kolonne auf Rückfluß gestellt und der Ansatz weitere 25 Stunden zum Rückfluß erhitzt und das Produkt anschließend in üblicher Weise isoliert. Das Produkt wies einen Schmelzpunkt Tm von 369 °C und ein Mw von 14.000 auf.

Beispiel 3

Durchführung wie Beispiel 1, jedoch wurden zusätzlich 4,2 g 1,3,5-Trichlorbenzol mit vorgelegt. Das Produkt wies einen Schmelzpunkt von 354 °C und ein Mw von 65.600 auf.

Vergleichsbeispiel I (nach Beispiel (b) aus EP-A 287 396, halbe Ansatzgröße)

39 g (0,125 Mol) 4,4′-Dibrombiphenyl, 18,4 g (0,125 Mol) 1,4-Dichlorbenzol und 19,5 g (0,25 Mol) Natriumsulfid $H_2O$-frei wurden in Gegenwart von 6,75 g Wasser, 248 g N-Methylpyrrolidon und 1 g Natriumhydroxid bei 220 °C 5 Stunden polymerisiert. Es wurde dabei ein Druck von ca. 5 bar erreicht. Das Produkt wies beim ersten Aufschmelzen einen Schmelzpunkt von 370 °C auf, der beim zweiten Aufschmelzen nicht mehr beobachtet wurde. Es wies ein Mw von 11.800 bei ausgeprägter bimodaler Verteilung auf.

Vergleichsbeispiel II (PAS-B-50 aus Di-chlor-biphenyl)

Durchführung wie Beispiel 1, jedoch werden
588,4 g (2,635 Mol) 4,4′-Di-chlor-biphenyl und
386,5 g (2,635 Mol) 1,4′-Dichlorbenzol eingesetzt.

Vergleichsbeispiel III (PAS-B-70 aus Di-brombiphenyl)

Durchführung wie Beispiel 1, jedoch werden
1.152,7 g (3,69 Mol) 4,4′-Di-brom-biphenyl,

232,8 g (1,58 Mol) 1,4′-Dichlorbenzol und 4.000 g NMC eingesetzt.

Tabelle 1

| (Vergleich von Brom- und Chlor-biphenylen) | | | | | |
|---|---|---|---|---|---|
| Beispiel | 4,4′-Di-Brom-biphenyl (Mol %) | 4,4-Di-Chlor-biphenyl (Mol %) | 1,4-Di-Chlor-Benzol (Mol) | Lsgs.-mittel | $\overline{M}_w$ |
| Beispiel 1 (erfind. gem.) | - | 70 | 30 | NMC | 35.300[1)] |
| Vergl.III | 70 | - | 30 | NMC | 11.700[2)] |
| Vergl. I | 50 | - | 50 | NMP | 11.800[3)] |
| Vergl.II (erfind. gem.) | - | 50 | 50 | NMC | 77.800[4)] |

[1)] s. Fig. 1,
[2)] s. Fig. 4,
[3)] s. Fig. 2,
[4)] s. Fig. 3

Beispiel 4 (PAS-B-70, niedermolekular)

Durchführung und Ansatz wie Beispiel 1, jedoch wird die Reaktion nach 8 h bei 230 °C Reaktionstemperatur abgebrochen und wie beschrieben aufgearbeitet. Das Polyarylensulfid hat ein $\overline{M}_w$ von 13.400.

Tabelle 2

| (Uneinheitlichkeit U in Abhängigkeit von eingesetzten Halogenaromaten) | | | | |
|---|---|---|---|---|
| Beispiel | 4,4′-Di-Brom biphenyl Mol % | 4,4′-Di-Chlor biphenyl Mol % | $\overline{M}_w$ | U |
| Beisp. 4 (erfind. gem.) | - | 70 | 13.400 | 1,90 |
| Vergl.III | 70 | - | 11.700 | 3,45 |

Beispiel 5 (PAS-B-60)

Durchführung wie Beispiel 1, jedoch werden 614,4 g (2,75 Mol) 4,4′-Dichlorbiphenyl, 270 g (1,84 Mol) 1,4-Dichlorbenzol, 636,3 g Natriumsulfidhydrat (4,93 Mol $Na_2S$), 77,9 g (0,69 Mol) Caprolactam und 2.820 g NMC eingesetzt.

Beispiel 6 (PAS-B-65)

Wie Beispiel 5, jedoch werden 665,6 g (2,98 Mol) 4,4′-Dichlorbiphenyl, 236,2 g (1,61 Mol) 1,4-Dichlorbenzol und 2.890 g NMC eingesetzt.

Beispiel 7 (PAS-B-75)

Wie Beispiel 5, jedoch werden 768 g (3,44 Mol) 4,4′-Dichlorbiphenyl, 168,7 g (1,15 Mol) 1,4-Dichlorbenzol und 2.990 g NMC eingesetzt.

Beispiel 8 (PAS-B-80)

Wie Beispiel 5, jedoch werden 819 g (3,67 Mol) 4,4′-Dichlorbiphenyl, 135 g (0,92 Mol) 1,4-Dichlorbenzol und 3050 g NMC eingesetzt.

Tabelle 3

| (Einfluß des Biphenylensulfid-Anteils auf die physikalischen Eigenschaften des PAS-B) | | | | | | | |
|---|---|---|---|---|---|---|---|
| Beispiel | Mol % Biphenyl | $\overline{M}_w$ | DSC (dynamisch, 20 K/min) | | | | |
| | | | $T_S$(°C) | $\Delta H_S$(l/g) | $T_K$(°C) | $\Delta H_K$(l/g) |
| 5 | 60 | 54.100 | 293/367 | 21 | 273 | 10 |
| 6 | 65 | 49.800 | 303/368 | 24 | 310 | 23 |
| 1 | 70 | 35.300 | 358 | 31 | 332 | 29 |
| 7 | 75 | 18.800 | 368 | 48 | 354 | 32 |
| 8 | 80 | 15.000 | 380 | 63 | 364 | 38 |

Herstellung der Spritzgießmassen:

Die erfindungsgemäß hergestellten Copolyarylensulfidmassen wurden durch Mischen und Homogenisieren der Basiskomponenten auf einer Zweiwellenschnecke ZSK 32 (Werner & Pfleiderer) bei einer Schmelzetemperatur von 370°C hergestellt. Die zu Granulat zerhackten Stränge wurden über Nacht getrocknet und auf üblichen Spritzgußmaschinen zu Normprüfkörpern verarbeitet, die nach DIN- bzw. ASTM-Norm geprüft wurden (siehe Tabelle 4).

Tabelle 4

| ((Spritzgießmassen) | | | | | |
|---|---|---|---|---|---|
| Beispiel | 9 erfind. gem. | 10 Vergl. | 10a[7)] | 11 Vergl. | 12 Vergl. |
| PAS-B-70[1] ) | 60 | 42 | | 24 | - |
| PPS[2] ) | - | 18 | | 36 | 60 |
| Glasfasern[3] ) | 40 | 40 | | 40 | 40 |
| Biege-E-Modul [MPa] | 11.200 | 13.400 | | 12.100 | 12.300 |
| $\epsilon$6B[4] ) [%] | 1,7 | 1,7 | | 1,3 | 1,9 |
| HDT-A[5] ) [°C] | 290 | 253 | 280 | 251 | 260 |
| $\eta_{\overline{M}}$[6)][Pa.s] | 48 | 29 | | 12 | 5 |

1) Hergestellt nach Beispiel 1
2) Tedur-PPS mit $\overline{M}_w$ 38.000
3) geschlichtete 10 $\mu$m-Glasfaser, 6 mm Länge
4) Randfaser-Dehnung bei Biege-Versuch
5) Wärmeformbeständigkeit, Methode Iso-80
6) Schmelzviskosität bei 380°C in einem Schergefälle von $10^3$ (1/s), gemessen in einem Hochdruck-Kapillar-Viskosimeter
7) Probekörper aus Beispiel 10 bei 250°C, 5 h lang getempert.

Im erfindungsgemäßen Beispiel 9 werden ohne Temperung höhere Wärmeformbeständigkeiten erzielt, als mit Mischungen aus Polybiphenylensulfiden und PPS.

Beispiel 13

Herstellung der Folie

Das gemäß Beispiel 3 hergestellte Copolyarylensulfid und zum Vergleich ein handelsübliches Polyphenylensulfid (Fortron 300 B der Celanese) werden unter Verwendung eines Zweiwellenschneckenextruders (ZSK 32) bei 350°C bis 390°C aus einer 400 mm breiten Breitschlitzdüse mit einer Spaltweite von 1,0 mm extrudiert. Die aus der Düse tretenden Schmelzen werden auf einen Vierwalzenstuhl als 350 mm breite und 0,5 mm dicke Folien abgezogen. Da die Temperatur der ersten Abzugswalze, mit der die Polybiphenylensulfidschmelzen in unmittelbare Berührung kommen, bei 30°C liegt, werden amorphe Folien erhalten.

Aus diesen Folien werden Abschnitte mit den Abmessungen 300 x 300 mm in einen Streckrahmen gespannt und dann bei 160 °C zunächst in Extrusionsrichtung, dann quer zur Extrusionsrichtung im Verhältnis 1:3 verstreckt. Die Geschwindigkeit der Verstreckung beträgt 6 cm/s. Dabei werden je zwei parallele Einschnürungen quer zur jeweiligen Verstreckrichtung beobachtet, die erst am Ende der Verstreckung verschwinden.

Ihre Dicke beträgt nur noch 0,05 mm. Im Anschluß an die Verstreckung werden die noch im Streckrahmen befindlichen Folien jeweils 20 Minuten lang auf 300 °C erhitzt.

Die mechanischen Eigenschaften der Folien zeigt Tabelle 5.

Tabelle 5

| Folien aus Polyarylensulfid gemäß Beispiel 13 | | | Vergleich |
|---|---|---|---|
| Reißfestigkeit | längs | 235 | 200 MPa |
| | quer | 212 | 190 MPa |
| Dehnung beim Bruch | längs | 40 % | 35 % |
| | quer | 50 % | 45 % |
| Tm gemessen an Folie | - | 348° C | 281° C |

Folienabschnitte gemäß Beispiel 5 die jeweils 2 Stunden lang auf 280 °C erhitzt wurden, zeigen Nachschwindungen von weniger als 0,3 %.

Beispiel 14 Fasern erfindungsgemäß

Das gemäß Beispiel 3 hergestellte Polymerisat wird mit einem Schmelzspinnextruder durch eine Einlochdüse mit 0,5 mm Durchmesser extrudiert. Die Abkühlung des Monofiles erfolgte in einem Wasserbad, der Abzug betrug 200 m/min. Die Verstreckung erfolgte zweistufig auf Kontaktheizern bei 160 °C auf einem Gesamtstreckgrad von 5,3. Das so erhaltene Monofil wies folgende textile Daten auf:

Titer 23 dtex
Feinheitsfestigkeit 3,2 cN/dtex
Reißdehnung 13 %
Anfangsmodul 39 cN/dtex
Kochschrumpf 13 %.

Die Röntgenweitwinkelstreuung an dieser Faser ergab eine hohe Orientierung, aber nur eine geringe Kristallinität.

Das Monofil wurde bei 320 °C auf einer beheizten Galette unter Spannung mit einer Verweilzeit von zwei Minuten fixiert. Es ergaben sich folgende textile Daten:

Titer 24 dtex
Feinheitsfestigkeit 3,3 cN/dtex
Reißdehnung 17 %
Anfangsmodul 44 cN/dtex
Kochschrumpf <0,2 %
Heißluftschrumpf 240 °C <0,2 %

Ein Kriechversuch, bei dem 10 cm des Monofiles unter einer Last von 0,1 cN/dtex von Raumtemperatur auf 300 °C aufgeheizt und eine Stunde bei 300 °C gehalten wurde, ergab eine Dehnung von 1,2 % nach einer Stunde.

Die Röntgenweitwinkelstreuung an dieser Faser ergab eine hochorientiert-kristalline Struktur. Nach einer spannungslosen Temperaturbehandlung des fixierten Monofiles 24 Stunden bei 300 °C in Luft ergaben sich noch folgende textile Daten:

Feinheitsfestigkeit 3,1 cN/dtex
Reißdehnung 19 %

Anfangsmodul 43 cN/dtex
Die textilen Daten bleiben nach der Temperaturbehandlung nahezu unverändert.

Beispiel 16 (Vergleich)

Ein gemäß EP-A 171 021 hergestelltes Polyphenylensulfid mit einer Schmelzviskosität von 360 Pa's bei 306 °C wurde bei 295 °C durch eine Düse mit dreißig Bohrungen mit 0,25 mm Durchmesser und einer Kanallänge von 0,5 mm versponnen.

Der Düsenfilter bestand aus einem VA-Gewebe mit 16.000 Maschen/$cm^2$.

Die Abzugsgeschwindigkeit betrug 500 m/min. Das Spinngut wurde dreistufig (zweimal in siedendem Wasser, anschließend auf Kontaktheizer bei 135 °C) auf einen Gesamtstreckgrad von 7,1 verstreckt und anschließend bei 260 °C unter Spannung mit einer Verweilzeit von einer Minute fixiert.

Es ergaben sich folgende textile Daten:
Titer 24 dtex
Feinheitsfestigkeit 4,1 cN/dtex
Reißdehnung 11 %
Anfangsmodul 55 cN/dtex
Kochschrumpf <0,2 %
Thermoschrumpf 240 °C <0,2 %.
Der Kriechversuch nach 1 Stunde bei 240 °C und einer Last von 0,1 cN/dtex ergab eine Dehnung von 1 %.

Die Textildaten der Fasern aus den beiden Polymertypen sind in ähnlicher Größenordnung, die Temperaturstabilität der Faser gemäß Beispiel 2 ist jedoch deutlich höher (Tm Beispiel 6.1: 349 °C, Tm Beispiel 6.2: 278 °C).

## Patentansprüche

**1.** Verfahren zur Herstellung von Copolyarylensulfiden, in welchem
a) 50 bis 95 Mol.-% Di-Chlorbiphenyle der Formeln (Va) und/oder (Vb)

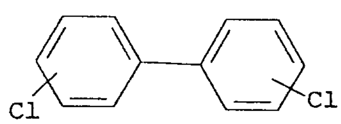 (Va) oder 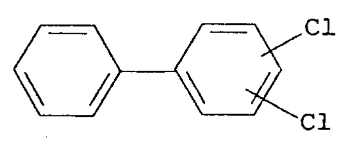 (Vb)

und
50 bis 5 Mol.-% Dihalogenaromaten der Formel (VI)

X-A-X (VI),

worin A für
-Ar-R- steht mit Ar: $C_6$-$C_{24}$-C-Aromat, außer Biphenyl, oder ein heterocyclischen Rest mit 5-14-Ringatomen, wobei bis zu 3-Ring-C-Atome durch Heteroatome wie N, O, S ersetzt sein können, oder $C_6$-$C_{24}$-Alkyl-Aromat
und R = Einfachbindung, O-Ar, S-Ar,

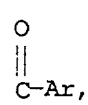

SO-Ar, $SO_2$-Ar,
wobei Ar die oben angegebene Bedeutung hat und X Halogen ist,
b) 0 - 5 Mol.-% be zogen auf a) eines Tri- oder Tetrahalogenaromaten der Formel (VII)

$Ar^2X_n$ (VII),

wobei

Ar² ein $C_6$-$C_{24}$-C-Aromat, außer Biphenyl oder ein heterocyclischer Rest mit 5 bis 14 Ringatomen, wobei bis zu 3 Ring-C-Atome durch Heroatome wie N, O, S ersetzt sein können, oder ein $C_6$-$C_{24}$-Alkyl-Aromat ist,

X für Halogen steht und

n für die Zahl 3 oder 4 steht

umgesetzt werden mit

c) Alkalisulfiden und/oder Alkalihydrogensulfide, bevorzugt Natrium- oder Kaliumsulfid oder deren Mischung, bevorzugt in Form ihrer Hydrate oder wäßrigen Lösungen, gegebenenfalls zusammen mit geringen Mengen Alkalihydroxiden wie Natrium- und Kaliumhydroxid, wobei das molare Verhältnis von (a + b) : c 0,75 : 1 bis 1,25 : 1 ist,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden, wobei dem Reaktionsgemisch auch 0,2 - 50 Mol.-%, bevorzugt 0,2 bis 25 Mol.-%, bezogen auf die Mole-Dihalogenaromate, einer Aminosäure zugegeben werden kann

e) gegebenenfalls in Anwesenheit von Monohalogen-Aromaten der Formel (VIII)

R-Ar-X (VIII),

worin

X für Halogen wie Cl oder Br steht,

Ar die für Formel (VII) angegebene Bedeutung hat

R gleich H ist, bzw. die für Formel (VI) angegebene Bedeutung hat,

wobei

die Umsetzung der Komponenten in einem polaren aprotischen Lösungsmittels in Anwesenheit eines Azeotropbildners bei Temperaturen erfolgt, die eine gleichzeitige destillative Auskreisung des Wassers erlauben.

## Claims

**1.** A process for the production of copolyarylene sulfides in which

a) 50 to 95 mol-% of dichlorobiphenyls corresponding to formulae (Va) and/or (Vb):

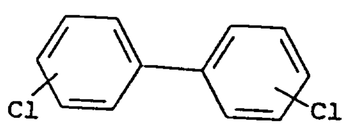 (Va) or 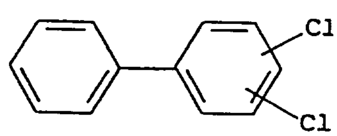 (Vb)

and

50 to 5 mol-% of aromatic dihalogen compounds corresponding to formula (VI):

X-A-X (VI)

in which

A = -Ar-R where

Ar is a $C_{6-24}$ C aromatic radical except for biphenyl or a heterocyclic radical containing 5 to 14 ring atoms, up to 3 ring C atoms being replaceable by hetero atoms, such as O, N, S, or an aromatic $c_{6-24}$ alkyl radical and

R is a single bond, O-Ar, S-Ar,

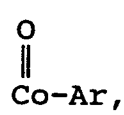

SO-Ar, $SO_2$-Ar with the above meaning for Ar and

X is halogen, and

b) 0 to 5 mol-%, based on a), of an aromatic trihalogen or tetrahalogen compound corresponding to formula (VII):

$Ar'X_n$ (VII)

in which

Ar' is an aromatic $C_{6-14}$ ring except for biphenyl or a heterocyclic radical containing 5 to 14 ring atoms, up to 3 ring C atoms being replaceable by heteroatoms such as N, O, S, or an aromatic $C_{6-24}$ alkyl radical,

X is halogen and

n is the number 3 or 4

are reacted with

c) alkali metal sulfides and/or alkali metal hydrogen sulfides, preferably sodium or potassium sulfide or mixtures thereof, preferably in the form of their hydrates or aqueous solutions, optionally together with small quantities of alkali metal hydroxides, such as sodium and potassium hydroxide, the molar ratio of (a + b) : c being from 0.75 : 1 to 1.25 : 1,

d) optionally in the presence of catalysts, such as alkali metal carboxylates, alkali metal phosphates, alkali metal phosphonates, alkali metal fluorides, alkali metal alkyl sulfonates or N,N-dialkylcarboxylic acid amides; 0.2 to 50 mol-% and preferably 0.2 to 25 mol-%, based on the mols of aromatic dihalogen compounds aromatic dihalogen compounds, of an amino acid may also be added to the reaction mixture,

e) optionally in the presence of aromatic monohalogen compounds corresponding to formula (VIII):

R-Ar-X (VIII)

in which

X is halogen, such as Cl or Br,

Ar is as defined for formula (VII),

R represents H or has the meaning defined for formula (VI),

the components being reacted in an aprotic solvent in the presence of an entraining agent at temperatures which enable the water to be simultaneously removed from the circuit.

## Revendications

**1.** Procédé de préparation de copolymères de sulfures d'arylène, dans lequel on fait réagir :

a) 50 à 95 mol% de dichlorobiphényles de formules Va et/ou Vb :

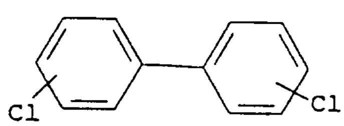
(Va) ou
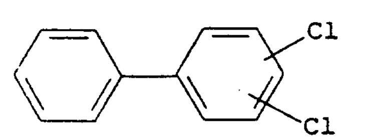
(Vb)

et

50 à 5 mol% de composés dihalogénoaromatiques de formule VI :

X-A-X (VI)

dans laquelle A représente :

-Ar-R- avec Ar = radical aromatique en $C_6$-$C_{24}$, à l'exception du radical biphényle, ou radical hétérocyclique contenant 5 à 14 atomes cycliques, jusqu'à 3 atomes de carbone cycliques pouvant être remplacés par des hétéroatomes tels que N, O, S ; ou radical alkylaromatique en $C_6$-$C_{24}$ et

R = liaison simple, O-Ar, S-Ar,

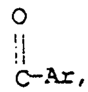

SO-Ar, $SO_2$-Ar,

Ar ayant les significations indiquées ci-dessus et X représentant un halogène,

b) 0 à 5 mol%, par rapport à a), d'un composé tri- ou tétra-halogénoaromatique de formule VII :

$Ar^2X_n$ (VII)

dans laquelle

$Ar^2$ représente un radical carboné aromatique en $C_6$-$C_{24}$, à l'exception du radical biphényle, ou un radical hétérocyclique contenant de 5 à 14 atomes cycliques, jusqu'à 3 atomes de carbone cycliques pouvant être remplacés par des hétéroatomes tels que N, O, S ; ou un radical alkylaromatique en $C_6$-$C_{24}$,

X représente un halogène et

n est égal à 3 ou 4,

avec

c) des sulfures alcalins et/ou des bisulfures alcalins, de préférence le sulfure de sodium ou de potassium ou leurs mélanges, de préférence à l'état d'hydrates ou à l'état de solutions aqueuses, le cas échéant avec des petites quantités d'hydroxydes alcalins tels que l'hydroxyde de sodium et l'hydroxyde de potassium, à un rapport molaire (a + b) : c allant de 0,75 : 1 à 1,25 : 1,

d) le cas échéant en présence de catalyseurs tels que des carboxylates alcalins, des phosphates alcalins, des phosphonates alcalins, des fluorures alcalins, des alkylsulfonates alcalins ou des N,N-dialkylcarboxamides, le mélange de réaction pouvant également être additionné de 0,2 à 50 mol%, de préférence 0,2 à 25 mol%, par rapport aux moles de composés dihalogénoaromatiques, d'un aminoacide,

e) le cas échéant en présence de composés monohalogénoaromatiques de formule VIII :

R-Ar-X (VIII)

dans laquelle

X représente un halogène tel que Cl ou Br,

Ar a les significations indiquées en référence à la formule VII, et

R représente l'hydrogène ou a les significations indiquées en référence à la formule VI,

la réaction entre les composants étant effectuée dans un solvant polaire aprotonique en présence d'un agent azéotropique à des températures permettant une élimination simultanée de l'eau par distillation.

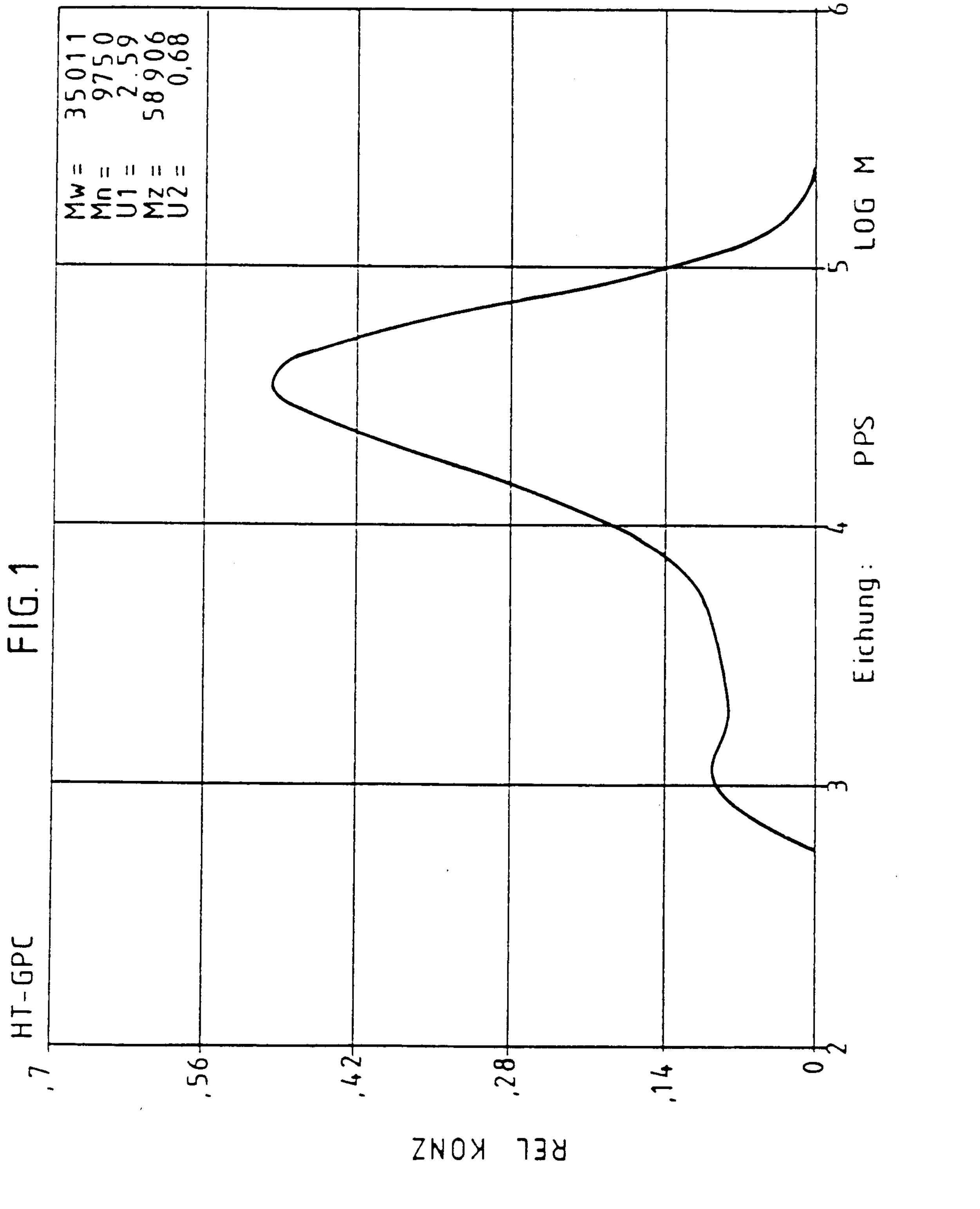
HT-GPC
Mw = 35011
Mn = 9750
U1 = 2.59
Mz = 58906
U2 = 0,68
Eichung : PPS
LOG M
2
3
4
5
6
REL KONZ
0
,14
,28
,42
,56
,7

FIG. 1

FIG.2

HT-GPC

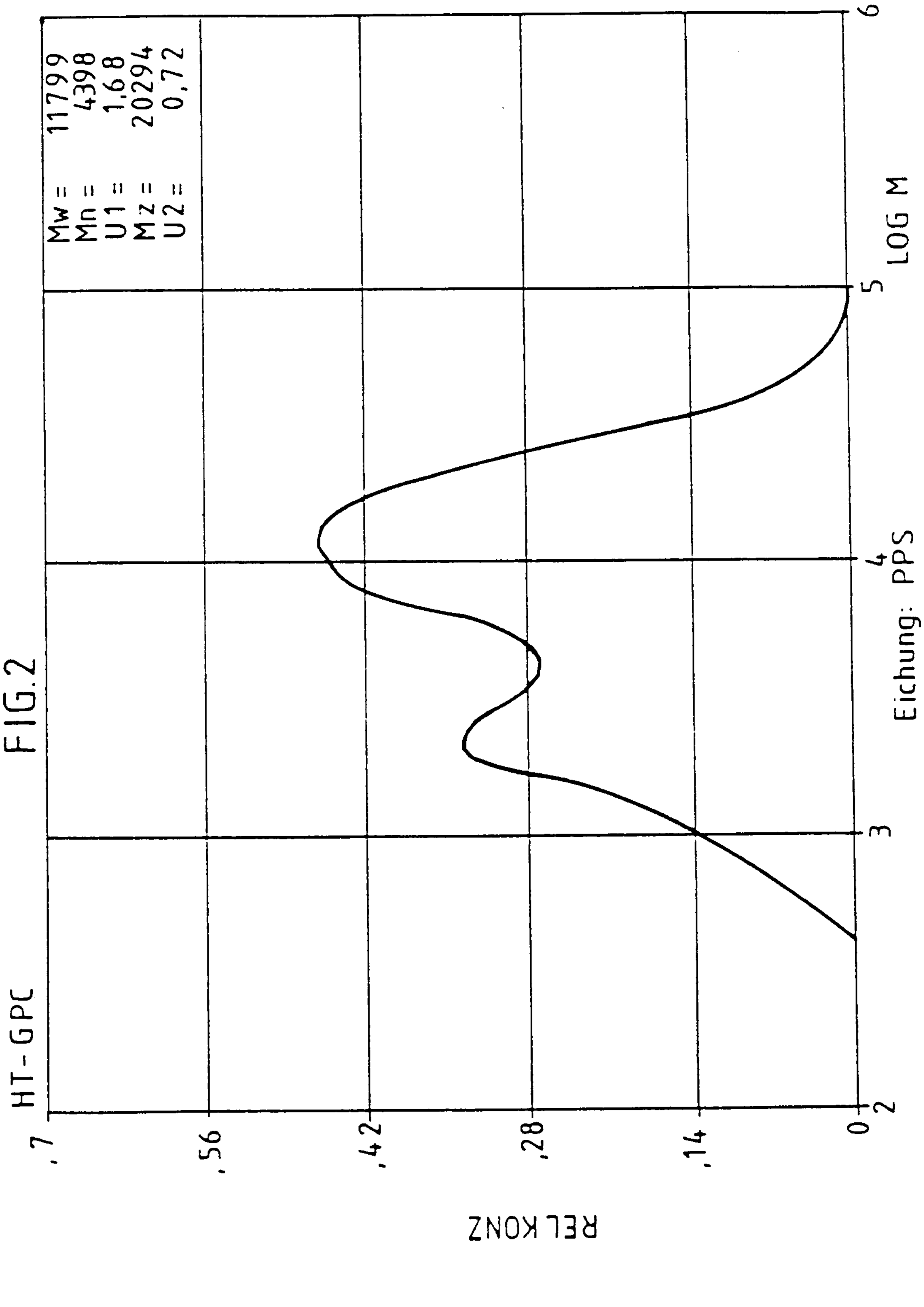
Mw = 11799
Mn = 4398
U1 = 1,68
Mz = 20294
U2 = 0,72
,7
,56
,42
,28
,14
0
2
3
4
5
6
LOG M
Eichung: PPS
REL KONZ

FIG. 3

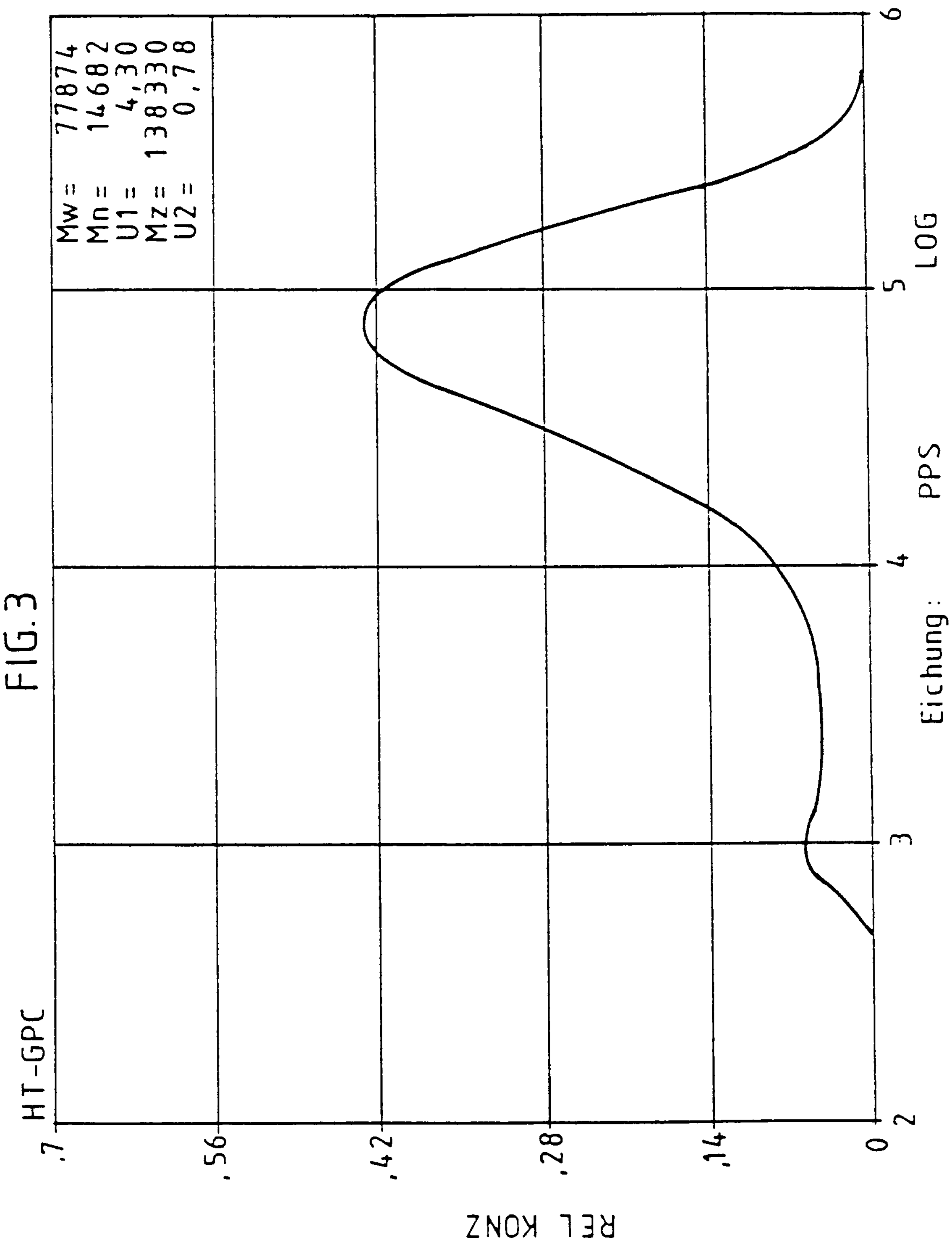
HT-GPC
REL KONZ
,7
,56
,42
,28
,14
0
2
3
4
5
6
Eichung: PPS LOG
Mw= 77874
Mn= 14682
U1= 4,30
Mz= 138330
U2= 0,78

FIG. 4

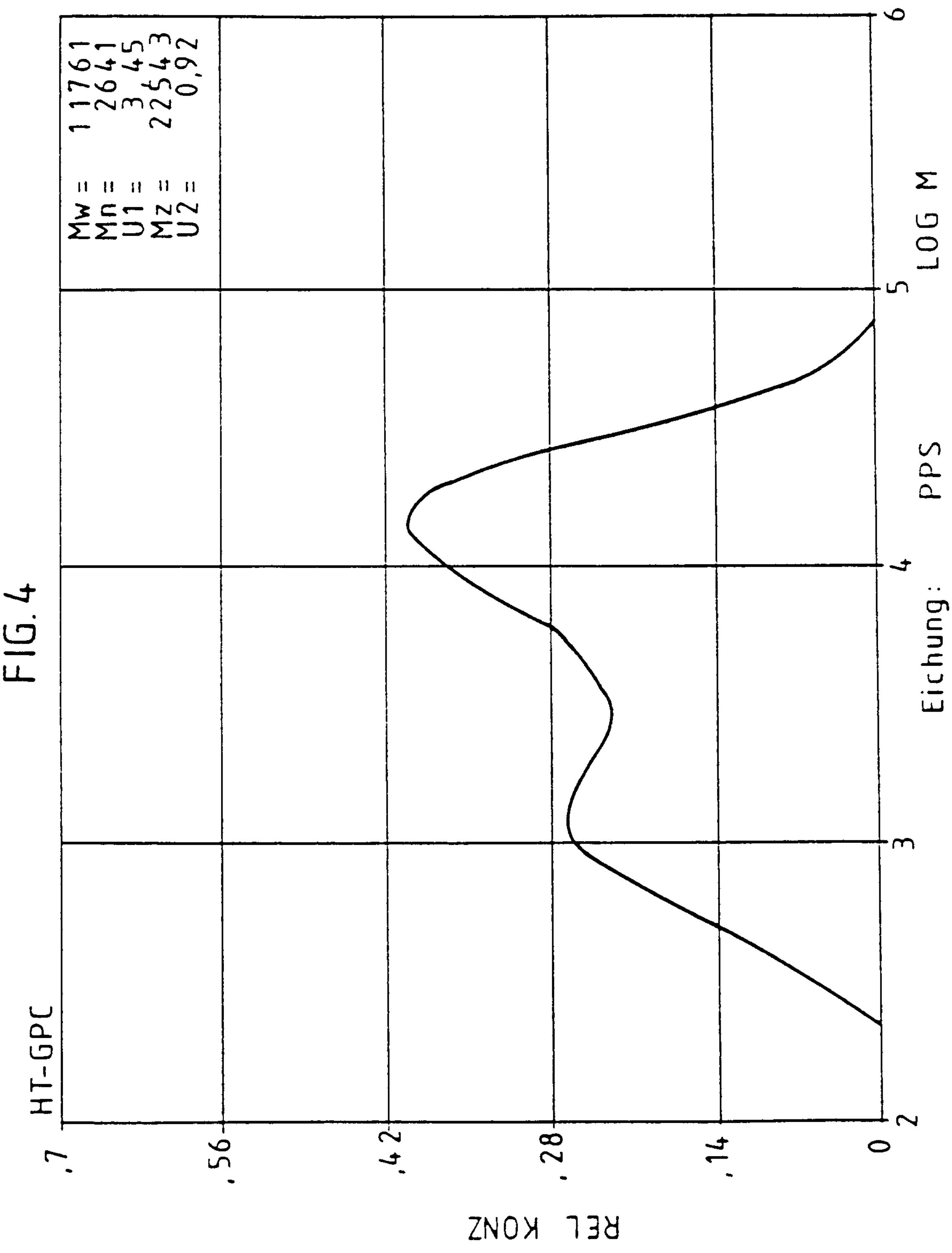
HT-GPC
Mw = 11761
Mn = 2641
U1 = 3,45
Mz = 22543
U2 = 0,92
REL KONZ
,7
,56
,42
,28
,14
0
2
3
4
5
6
LOG M
Eichung: PPS